# EUROPEAN PATENT SPECIFICATION

(11) **EP 3 225 862 B1**
(45) Date of publication and mention of the grant of the patent: **22.08.2018**
(21) Application number: 16162574.4
(22) Date of filing: 29.03.2016
(51) Int. Cl.: F16C 29/06, F16C 33/66

(54) **LINEAR SLIDE HAVING LUBRICATING DEVICE**
LINEARSCHLITTEN MIT SCHMIERVORRICHTUNG
GLISSIÈRE LINÉAIRE AYANT UN DISPOSITIF DE LUBRIFICATION

(43) Date of publication of application: 04.10.2017
(73) Proprietor: Hiwin Technologies Corp., Taichung 40852 (TW)
(72) Inventor: HUANG, Bo-Han, 40852 Taichung (TW); CHANG, Lung-Yu, 40852 Taichung (TW)
(74) Representative: Lang, Christian

(56) References cited:
- EP-A2- 0 950 465
- DE-B3-102006 056 805
- US-A1- 2013 108 194
- US-A1- 2015 071 576
- US-A1- 2015 086 140

## Description

### BACKGROUND OF THE INVENTION

### 1. Field of the Invention

The present invention relates to a linear slide, and more particularly to a linear slide having a lubricating device.

### 2. Description of the Prior Art

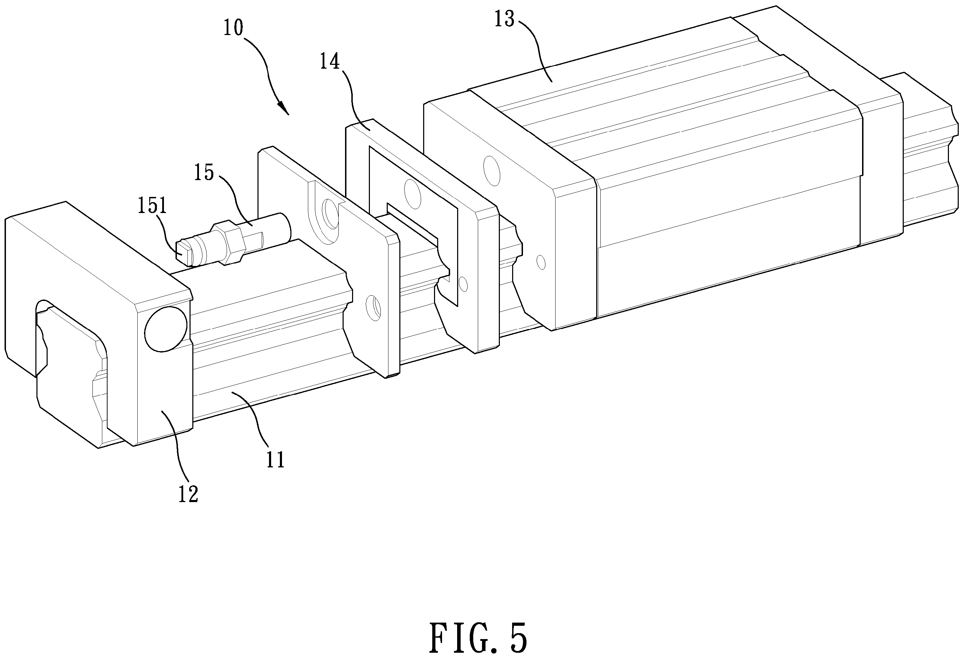

A linear slide and a ball screw are commonly used in precision transmission devices. Through a movable member, the linear slide and the ball screw can be displaced relative to a long axle. In order to improve the lubrication between the movable member and the long axle, a lubricating device is provided between the movable member and the long axle. As shown in FIG. 5, a long axle of a conventional linear slide (10) is provided with an oil tank (12). The oil tank (12) is filled with lubricant. A smearing structure (14) is provided between a movable member (13) slidably disposed on the long axle (11) and the inner side of the oil tank (12). A connector (15) having an oil guide member (151) is provided between the smearing structure (14) and the oil tank (12). The oil guide member (151) of the connector (15) absorbs the lubricant in the oil tank (12) and dispenses the lubricant to the smearing structure (14) to lubricate the rolling groove of the long axle (11). The oil guide member (151) of the linear slide (10) is made of wool felt. The lubricant is delivered by capillarity. On condition that the oil tank (12) has the lubricant, the oil guide member (151) will guide out the lubricant continuously. No matter whether the movable member (13) is moved or not, the lubricant is guided out continuously. This may cause a leak of oil. Such a linear slide is known i.e. from EP 0 950 465 A2. US 2015 / 0071576 A1 discloses a linear slide to improve the retention of lubricant in the reservoir, wherein the rolling elements are lubricated with a lubricating element made of porous synthetic resin and the lubricant reservoir is made of felts. Accordingly, the inventor of the present invention has devoted himself based on his many years of practical experiences to solve these problems.

### SUMMARY OF THE INVENTION

In view of the aforesaid problems, the primary object of the present invention is to provide a lubricating device able to control the outflow of oil, without lengthening a slide block module of a linear slide.

In order to achieve the aforesaid object, the linear slide having a lubricating device of the present invention comprises a long axle, a slide block module, a smearing member, and a dispenser. The long axle is an elongate structure extending in a direction defined as an axial direction. Two sides of the long axle are formed with rolling grooves in the axial direction. The slide block module is slidably disposed on the long axle, and comprises a slide block and two circulation members. The slide block has a rolling trough therein corresponding to the rolling grooves. The rolling grooves and the rolling trough form a load route. The slide block further has a plurality of circulation holes disposed in the axial direction and penetrating two end surfaces thereof. The two circulation members are disposed at the two end surfaces of the slide block, respectively. The two circulation members each have a plurality of circulation channels with two ends to communicate with the load route and the circulation holes, respectively. The load route, the circulation holes, and the circulation channels form a circulation route. The circulation route is adapted to receive a rolling member therein. At least one of the circulation members has an oil storage trough and a retaining through hole. The oil storage trough, the circulation channels, and the retaining through hole are in communication with each other. The oil storage trough is filled with lubricant. The smearing member is disposed in the retaining through hole. The dispenser covers the smearing member. The dispenser absorbs the lubricant and dispenses the lubricant to the smearing member. When the rolling member passes through the circulation channels, the rolling member is in contact with the smearing member. The smearing member and the dispenser are made of wool felt. The wool felt of the smearing member has a density different from that of the dispenser.

Preferably, each circulation member comprises a main body and a lid. The main body has the oil storage trough, the retaining through hole, and second half channels. The lid has first half channels corresponding to the second half channels. The first half channels and the second half channels form the circulation channels.

Preferably, the smearing member corresponds in shape to the retaining through hole.

Preferably, each circulation member is provided with a positioning cover. The positioning cover is adapted to cover the oil storage trough and press and secure the dispenser.

Through the dispenser of the present invention to cover the smearing member, the smearing member won't directly absorb the lubricant to decrease the amount of the outflow of the lubricant. In addition, the smearing member must be contact with the rolling member for the lubricant to flow out. Thus, when the rolling member is not in contact with the smearing member, the lubricant won't flow out from the smearing member. Furthermore, the wool felt of the smearing member has a density different from that of the dispenser. Preferably, the density of the wool felt of the smearing member is greater than that of dispenser, and vice versa. In this way, the amount of the lubricant from the smearing member can be controlled. The differential of the density of the wool felt can be adjusted according to different industries. The present invention can enhance the practicability of the lubricating device. Besides, the oil storage space uses the free space of the main body of the circulation member, without an additional oil tank to store the lubricant, so the length of the slide block module is not changed.

### BRIEF DESCRIPTION OF THE DRAWINGS

FIG. 1 is an exploded view of a linear slide having a lubricating device in accordance with a preferred embodiment of the present invention;
FIG. 2 is a perspective view of the linear slide having a lubricating device in accordance with the preferred embodiment of the present invention;
FIG. 3 is a sectional view taken along line A-A of FIG. 2;
FIG. 4 is a sectional view taken along line B-B of FIG. 2; and
FIG. 5 is a perspective view of a conventional linear slide having a lubricating device.

### DETAILED DESCRIPTION OF THE PREFERRED EMBODIMENTS

Embodiments of the present invention will now be described, by way of example only, with reference to the accompanying drawings.

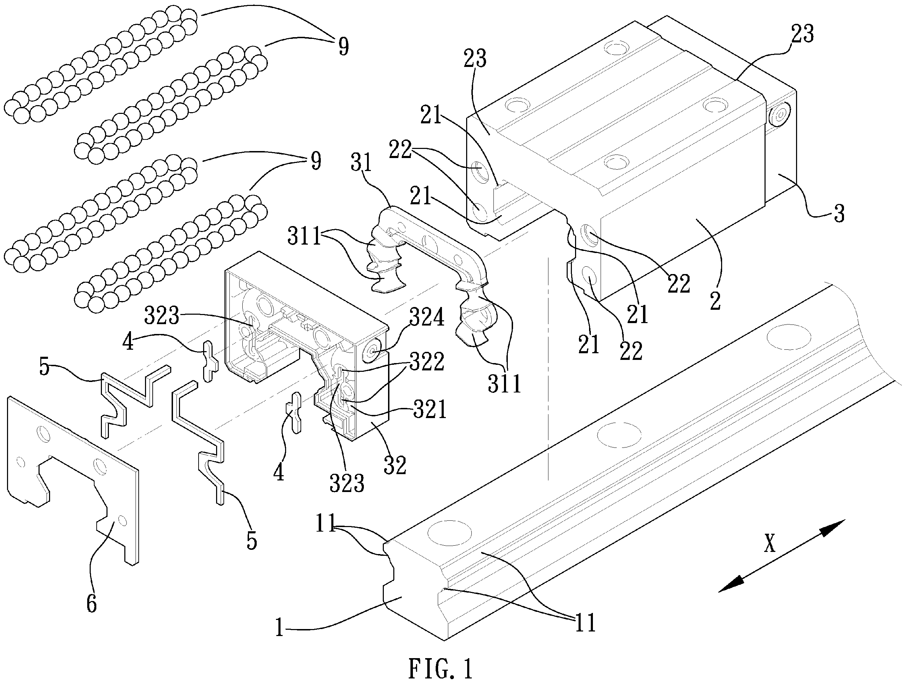

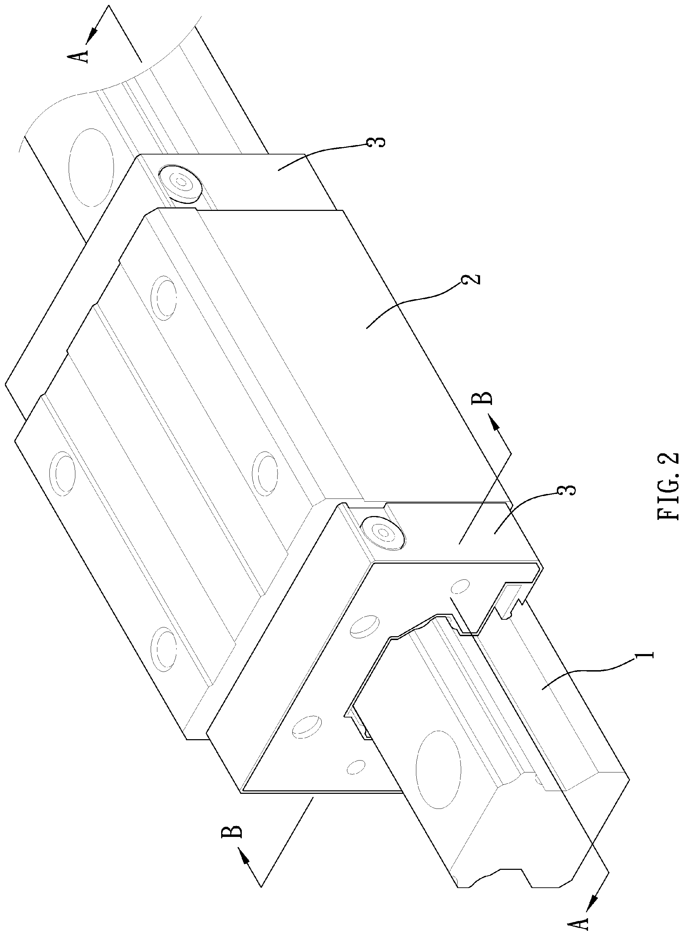

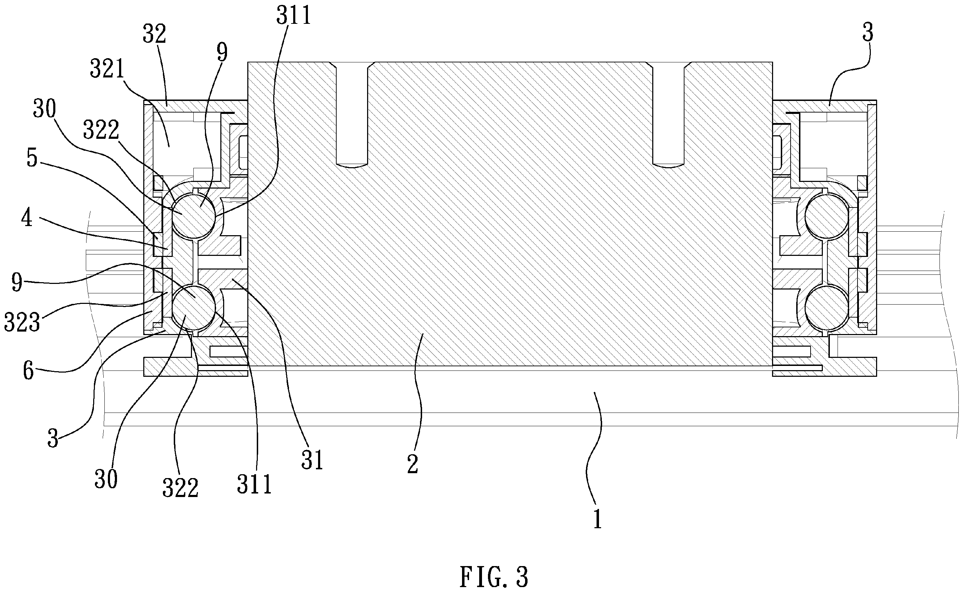

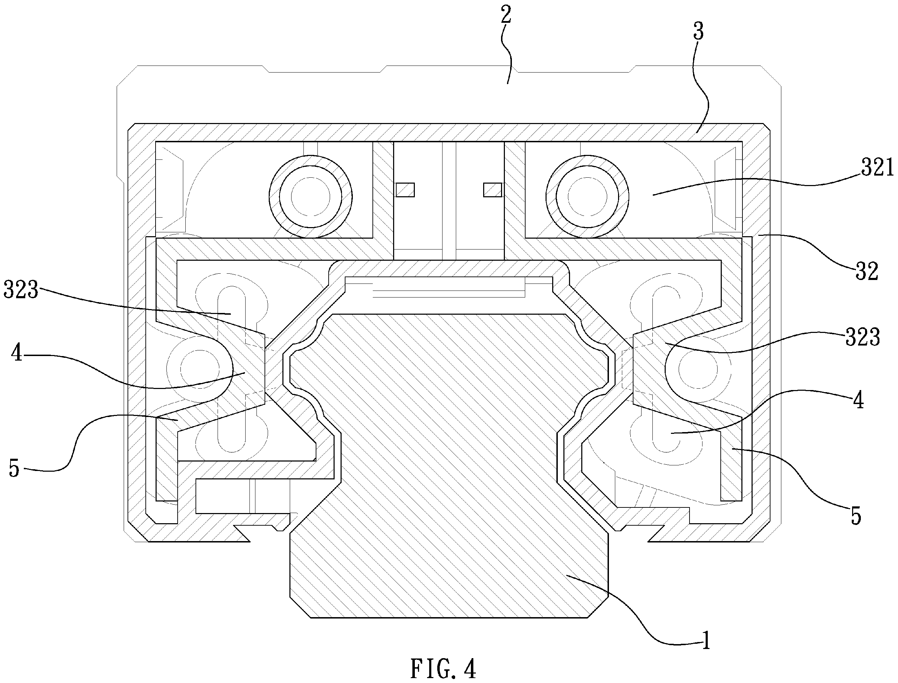

As shown in FIG. 1 through FIG. 4, a linear slide having a lubricating device in accordance with a preferred embodiment of the present invention comprises a long axle (1), a slide block module, a smearing member (4), and a dispenser (5). The long axle (1) is an elongate structure extending in a direction defined as an axial direction (X). Two sides of the long axle (1) are formed with rolling grooves (11) in the axial direction (X). The slide block module is slidably disposed on the long axle (1) and comprises a slide block (2) and two circulation members (3). The slide block (2) has a rolling trough (21) therein corresponding to the rolling grooves (11). The rolling grooves (11) and the rolling trough (21) form a load route. The slide block (2) further has a plurality of circulation holes (22) disposed in the axial direction (X) and penetrating two end surfaces (23) thereof. The two circulation members (3) are disposed at the two end surfaces (23) of the slide block (2), respectively. The two circulation members (3) each have a plurality of circulation channels (30) with two ends to communicate with the load route and the circulation holes (22) respectively. The load route, the circulation holes (22), and the circulation channels (30) form a circulation route. The circulation route is adapted to receive a rolling member (9) therein. At least one of the circulation members (3) has an oil storage trough (321) and a retaining through hole (323). The oil storage trough (321), the circulation channels (30), and the retaining through hole (323) are in communication with each other. The oil storage trough (321) is filled with lubricant. In this embodiment, in order to conveniently manufacture the circulation members by injection, each circulation member (3) comprises a main body (32) and a lid (31). The main body (32) has the oil storage trough (321), the retaining through hole (323), and second half channels (322). The lid (31) has first half channels (311) corresponding to the second half channels (322). The first half channels (311) and the second half channels (322) form the circulation channels (30). The smearing member (4) is disposed in the retaining through hole (323). In this embodiment, the smearing member (4) corresponds in shape to the retaining through hole (323), such that the smearing member (4) can be accommodated in the retaining through hole (323). The dispenser (5) is to cover the smearing member (4). Each circulation member (30) is provided with a positioning cover (6). The positioning cover (6) is adapted to cover the oil storage trough (321) and press and secure the dispenser (5). The dispenser (5) absorbs the lubricant and dispenses the lubricant to the smearing member (4). When the rolling member (9) passes through the circulation channels (30), the rolling member (9) gets contact with the smearing member (4) and is lubricated with the lubricant. When the rolling member (9) enters the load route, a film of oil is formed between the rolling member (9) and the rolling groove so as to prolong the service life of the linear slide. The smearing member (4) and the dispenser (5) are made of wool felt. The wool felt of the smearing member (4) has a density different from that of the dispenser (5). The density of the wool felt can be changed depending on the environment of use of various linear slides.

Although particular embodiments of the present invention have been described in detail for purposes of illustration, various modifications and enhancements may be made without departing from the spirit and scope of the present invention. Accordingly, the present invention is not to be limited except as by the appended claims.

### Prior art

(10) linear slide
(11) long axle
(12) oil tank
(13) movable member
(14) smearing structure
(15) connector
(151) oil guide member

### The present invention

(1) long axle
(11) rolling groove
(2) slide block
(21) rolling trough
(22) circulation hole
(23) end surface
(3) circulation member
(31) lid
(311) first half channel
(32) main body
(321) oil storage trough
(322) second half channel
(323) retaining through hole
(4) smearing plate
(5) dispenser
(6) positioning cover
(9) rolling member
(X) axial direction
(30) circulation channel

## Claims

1. A linear slide having a lubricating device, comprising
a long axle (1), a slide block module, a smearing member (4), and a dispenser (5),
the long axle (1) being an elongate structure extending in a direction defined as an axial direction (X), two sides of the long axle (1) being formed with rolling grooves (11) in the axial direction (X), the slide block module being slidably disposed on the long axle (1) and comprising
a slide block (2) and
two circulation members (3),
the slide block (2) having a rolling trough (21) therein corresponding to the rolling grooves (11), the rolling grooves (11) and the rolling trough (21) forming a load route, the slide block (2) further having a plurality of circulation holes (22) disposed in the axial direction (X) and penetrating two end surfaces (23) thereof, the two circulation members (3) being disposed at the two end surfaces (23) of the slide block (2) respectively,
the two circulation members (3) each have a plurality of circulation channels (30) with two ends to communicate with the load route and the circulation holes (22) respectively, the load route, the circulation holes (22), and the circulation channels (30) forming a circulation route, the circulation route being adapted to receive a rolling member (9) therein, at least one of the circulation members (3) having an oil storage trough (321) and a retaining through hole (323), the oil storage trough (321), the circulation channels (30), and the retaining through hole (323) being in communication with each other, the oil storage trough (321) being filled with lubricant,
the smearing member (4) being disposed in the retaining through hole (323), the dispenser (5) covering the smearing member (4),
the dispenser (5) absorbing the lubricant and dispensing the lubricant to the smearing member (4),
wherein when the rolling member (9) passes through the circulation channels (30), the rolling member (9) is in contact with the smearing member (4), and
wherein each circulation member (3) comprises a main body (32) and a lid (31), the main body (32) has the oil storage trough (321), the retaining through hole (323), and second half channels (322), the lid (31) has first half channels (311) corresponding to the second half channels (322), and the first half channels (311) and the second half channels (322) form the circulation channels (30),
**characterized in that**
the smearing member (4) and the dispenser (5) are made of wool felt, and the wool felt of the smearing member (4) has a density different from that of the dispenser (5).

2. The linear slide having a lubricating device as claimed in claim 1, wherein the smearing member (4) corresponds in shape to the retaining through hole (323).

3. The linear slide having a lubricating device as claimed in claim 1, wherein each circulation member (30) is provided with a positioning cover (6), and the positioning cover (6) is adapted to cover the oil storage trough (321) and press and secure the dispenser (5).

## Patentansprüche

1. Linearführung mit einer Schmiervorrichtung, umfassend:
eine lange Achse (1), ein Gleitblockmodul, ein Schmierstoffelement (4) und einen Dispenser (5),
wobei die lange Achse (1) eine längliche Struktur aufweist, die sich in eine Richtung erstreckt, die als axiale Richtung (X) definiert ist, wobei zwei Seiten der langen Achse (1) mit Rollnuten (11) in axialer Richtung (X) ausgebildet sind, wobei das Gleitblockmodul verschiebbar auf der langen Achse (1) angeordnet ist und umfasst:
einen Gleitblock (2) und
zwei Zirkulationselemente (3),
wobei der Gleitblock (2) eine Laufvertiefung (21) darin aufweist, die den Rollnuten (11) entspricht, wobei die Rollnuten (11) und die Laufvertiefung (21) einen Lastweg bilden, wobei der Gleitblock (2) weiterhin eine Vielzahl von Zirkulationslöchern (22) aufweist, die in axialer Richtung (X) angeordnet sind und zwei Endflächen (23) davon durchdringen, wobei die zwei Zirkulationselemente (3) entsprechend an den beiden Endflächen (23) des Gleitblocks (2) angeordnet sind, wobei die Zirkulationselemente (3) jeweils eine Vielzahl von Zirkulationskanälen (30) mit zwei Enden aufweisen, um entsprechend mit dem Lastweg und den Zirkulationslöchern (22) zu kommunizieren, wobei der Lastweg, die Zirkulationslöcher (22) und die Zirkulationskanäle (30) eine Umlaufstrecke bilden, wobei die Umlaufstrecke so angepasst ist, um ein Rollelement (9) darin aufzunehmen, wobei mindestens eines der Zirkulationselemente (3) einen Ölvorratsbehälter (321) und ein Rückhaltedurchgangsloch (323) aufweist, wobei der Ölvorratsbehälter (321), die Zirkulationskanäle (30) und das Rückhaltedurchgangsloch (323) miteinander in Verbindung stehen, wobei der Ölvorratsbehälter (321) mit Schmiermittel gefüllt ist,
wobei das Schmierstoffelement (4) in dem Rückhaltedurchgangsloch (323) angeordnet ist, wobei der Dispenser (5) das Schmierstoffelement (4) bedeckt, wobei der Dispenser (5) das Schmiermittel absorbiert und das Schmiermittel an das Schmierstoffelement (4) abgibt,
wobei das Rollelement (9), wenn das Rollelement (9) die Zirkulationskanäle (30) durchläuft, mit dem Schmierstoffelement (4) in Verbindung steht, und
wobei jedes Zirkulationselement (3) einen Hauptkörper (32) und eine Kappe (31) umfasst, wobei der Hauptkörper (32) den Ölvorratsbehälter (321), das Rückhaltedurchgangsloch (323), und die zweiten Halbkanäle (322) aufweist; wobei die Kappe (31) die ersten Halbkanäle (311) aufweist, die den zweiten Halbkanälen (322) entsprechen, und wobei die ersten Halbkanäle (311) und die zweiten Halbkanäle (322) die Zirkulationskanäle (30) bilden,
**dadurch gekennzeichnet, dass**
das Schmierstoffelement (4) und der Dispenser (5) aus Wollfilz bestehen, wobei der Wollfilz des Schmierstoffelements (4) eine andere Dichte aufweist, als der von dem Dispenser (5).

2. Linearführung mit einer Schmiervorrichtung, wie in Anspruch 1 beansprucht, bei welcher das Sehmierstoffelement (4) in der Form dem Rückhaltedurchgangsloch (323) entspricht.

3. Linearführung mit einer Schmiervorrichtung, wie in Anspruch 1 beansprucht, bei welcher jeder Zirkulationskanal (30) mit einer Positionierungsabdeckung (6) versehen ist, wobei die Positionierungsabdeckung (6) angepasst ist, um den Ölvorratsbehälter (321) abzudecken und den Dispenser (5) zu drücken und zu sichern.

## Revendications

1. Coulisseau linéaire comportant un dispositif de lubrification, comprenant:
un essieu long (1), un module de bloc de coulisseau, un organe d'étalement (4), et un distributeur (5),
l'essieu long (1) étant une structure allongée s'étendant dans un sens défini en tant qu'un sens axial (X), deux côtés de l'essieu long (1) étant formés avec des rainures de roulement (11) dans le sens axial (X), le module de bloc de coulisseau étant disposé de manière à pouvoir coulisser sur l'essieu long (1) et
comprenant:
un bloc de coulisseau (2) et
deux organes de circulation (3),
le bloc de coulisseau (2) comportant une dépression de roulement (21) à l'intérieur de celui-ci correspondant aux rainures de roulement (11), les rainures de roulement (11) et la dépression de roulement (21) constituant une voie de charge, le bloc de coulisseau (2) comportant en outre une pluralité de trous de circulation (22) disposés dans le sens axial (X) et pénétrant deux surfaces d'extrémité (23) de celui-ci, les deux organes de circulation (3) étant disposés respectivement aux deux surfaces d'extrémité (23) du bloc de coulisseau (2), chacun des deux organes de circulation (3) comporte une pluralité de canaux de circulation (30) avec deux extrémités pour communiquer respectivement avec la voie de charge et les trous de circulation (22), la voie de charge, les trous de circulation (22) et les canaux de circulation (30) constituant une voie de circulation, la voie de circulation étant apte à recevoir un organe de roulement (9) à l'intérieur de celle-ci, au moins l'un des organes de circulation (3) comportant une dépression de stockage d'huile (321) et un trou traversant de rétention (323), la dépression de stockage d'huile (321), les canaux de circulation (30) et le trou traversant de rétention (323) étant en communication l'un avec l'autre, la dépression de stockage d'huile (321) étant remplie de lubrifiant,
l'organe d'étalement (4) étant disposé dans le trou traversant de rétention (323), le distributeur (5) recouvrant l'organe d'étalement (4),
le distributeur (5) absorbant le lubrifiant et distribuant le lubrifiant à l'organe d'étalement (4),
dans lequel, lorsque l'organe de roulement (9) passe à travers les canaux de circulation (30), l'organe de roulement (9) est en contact avec l'organe d'étalement (4), et
dans lequel chaque organe de circulation (3) comprend un corps principal (32) et un couvercle (31), le corps principal (32) comporte la dépression de stockage d'huile (321), le trou traversant de rétention (323) et des deuxièmes demi-canaux (322), le couvercle (31) comporte des premiers demi-canaux (311) correspondant aux deuxièmes demi-canaux (322), et les premiers demi-canaux (311) et les deuxièmes demi-canaux (322) forment les canaux de circulation (30),
**caractérisé en ce que**
l'organe d'étalement (4) et le distributeur (5) sont constitués de feutre de laine, et
le feutre de laine de l'organe d'étalement (4) présente une densité différente de celle du distributeur (5).

2. Coulisseau linéaire comportant un dispositif de lubrification selon la revendication 1, dans lequel la forme de l'organe d'étalement (4) correspond à la forme du trou traversant de rétention (323).

3. Coulisseau linéaire comportant un dispositif de lubrification selon la revendication 1, dans lequel chaque organe de circulation (30) est pourvu d'un couvercle de positionnement (6), et le couvercle de positionnement (6) est apte à recouvrir la dépression de stockage d'huile (321) ainsi qu'à presser et à fixer le distributeur (5).
